# EUROPEAN PATENT SPECIFICATION

(11) **EP 0 354 773 B1**
(45) Date of publication and mention of the grant of the patent: **15.03.1995**
(21) Application number: 89308078.8
(22) Date of filing: 09.08.1989
(51) Int. Cl.: G11B 7/26

(54) **Optical disk manufacture**
Herstellung optischer Platten
Fabrication de disques optiques

(30) Priority: 09.08.1988 GB 8818835
(43) Date of publication of application: 14.02.1990
(73) Proprietor: PLASMON DATA SYSTEMS, INC., San Jose California 95134 (US)
(72) Inventor: Helfet, Peter Roy, London NW4 1SD (GB); Longman Robert James, Coton Cambridgeshire (GB); Brynjolffssen, Jitka, Royston Hertfordshire (GB)
(74) Representative: Abrams, Michael John

(56) References cited:
- EP-A- 0 081 649
- FR-A- 2 367 598
- PATENT ABSTRACTS OF JAPAN vol. 10, no. 52 (P-432)(2109) 28 February 1986,& JP-A-60 195749 (FUJITSU K.K.) 04 October 1985,
- PATENT ABSTRACTS OF JAPAN vol. 10, no. 298 (P-505)(2354) 09 October 1986,
- PATENT ABSTRACTS OF JAPAN vol. 8, no. 202 (P-300)(1639) 14 September 1984,& JP-A-59 084356 (RICOH K.K.) 16 May 1984,
- PATENT ABSTRACTS OF JAPAN vol. 12, no. 446 (C-546)(3293) 24 October 1988,& JP-A-63 169391 (KOBE STEEL LTD) 13 July 1988,
- 2311 Fujitsu-Scientific & Technical Journal vol. 23,no. 1, 1987, Kawasaki, Japan pages 44 - 53; Ken-ichi Itoh et al.: "ReplicationMaster for Optical Disk Substrates"
- 433 Electronics & Communications in Japanvol. 65, no. 10, October 1982, Silver Spring, Maryland, USA pages 110 - 118;Mikio Takeshima et al.: "Application of Plastic Substrate for Laser Beam Memory"

## Description

This invention relates to a method of reducing surface noise during optical disk manufacture.

Conventional processing of optical disks uses etching of photoresist to produce a surface relief pattern containing grooves for track guidance and coded address information to enable the drive to locate areas for recording and reading of data. Conventionally the resist is electroplated to produce a nickel master from which replicas are produced by injection moulding or casting. Subsequently a recording layer is deposited on the surface by a process such as spinning or vacuum deposition. During this processing - especially during developing of the photoresist - the surface may become roughened and the surface noise of the finished product may be increased.

It is known from Fujitsu Scientific & Technical Journal vol. 23, no. 1, 1987, Kawasaki, Japan; pages 44-53; Ken-ichi Itoh et al.: "Replication Master for Optical Disk Substrates" that one cause of surface noise is the dissolution of unexposed regions of photoresist upon development of the master disk. This is overcome by using a photoresist development process which removes exposed photoresist but does not affect unexposed regions.

It is also known from FR-A-2367598 (N.V. Philips' Gloeilampenfabrieken) to use nickel master dies for the production of video disks. Each nickel master die is produced by treating a flat glass substrate disk having an information track consisting of cured photoresist, the disk being first provided in an electroless manner with a layer of silver or nickel, and then electroplated with a nickel layer. The glass substrate is then removed to leave a nickel/silver 'father' disk, which may be used as a die, and further copies may be made by electrodeposition onto the father disk, these copies being known as 'mother' disks. These mother disks may be copied to produce further disks which are known as dies.

This invention seeks to reduce the surface noise of the final product by means of processing at an intermediate stage of manufacture.

According to the present invention there is provided a method of manufacturing optical disks of the type having a surface relief pattern, the method comprising the steps of: forming a master disk by an etching or photoresist process; and electroplating the resulting resist with nickel to produce an intermediate electroplated nickel copy; the method being characterised in that it further comprises the steps of:
i) applying a smoothing layer consisting of (a) polymethyl methacrylate (PMMA) in a solvent solution, or (b) a diluted photoresist, or (c) a diluted electron beam resist to the surface of the electroplated nickel copy;
ii) metallising the smoothing layer and making an electroformed copy thereof; and
iii) using a further generation copy as a template for the casting or injection moulding of replica disks.

The invention will now be illustrated further with reference to the accompanying drawing, in which:

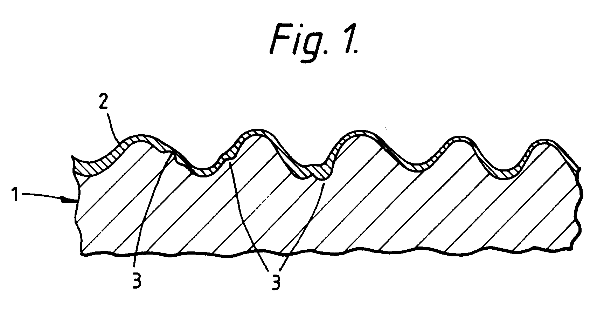

Figure 1 is a schematic view, in cross-section and highly magnified, of an intermediate nickel copy treated by a method of this invention.

Reference will be made to the drawing in the Example which follows.

### Example 1 - Treatment of Nickel Stampers

An intermediate nickel copy 1 (see Fig. 1) is produced from a master disk. A thin smoothing layer 2 is then applied to the surface by spin coating or dipping using either (a) polymethyl methacrylate (PMMA) in a suitable solvent solution with good wetting properties, or (b) a diluted photoresist, or (c) a diluted electron beam resist. For (b) and (c), spinning at about 800 rpm for about 5 minutes is preferred. If desired, the surface being treated may be covered by a contoured top plate in order to improve uniformity. As a result of this operation, the layer 2 obliterates most of the irregularities 3 in the nickel surface. After coating, the surface is metallised to make it conducting and a copy is made by electroforming (not shown). This copy or a further generation copy is used for replication. It has been found that the smoothing process applied in this way can reduce surface noise by as much as 6dB.

## Claims

1. A method of manufacturing optical disks of the type having a surface relief pattern, the method comprising the steps of: forming a master disk by an etching or photoresist process; and electroplating the resulting resist with nickel to produce an intermediate electroplated nickel copy; the method being characterised in that it further comprises the steps of:
i) applying a smoothing layer (2) consisting of (a) polymethyl methacrylate (PMMA) in a solvent solution, or (b) a diluted photoresist, or (c) a diluted electron beam resist to the surface of the electroplated nickel copy (1);
ii) metallising the smoothing layer and making an electroformed copy thereof; and
iii) using a further generation copy as a template for the casting or injection moulding of replica disks.

## Patentansprüche

1. Verfahren zur Herstellung optischer Scheiben des Typs, die ein Oberflächenreliefmuster haben, mit den Schritten: Herstellen einer Master-Scheibe durch einen Ätz- oder Photoresistprozeß und Elektroplattieren des resultierenden Resists mit Nickel, so daß eine elektoplattierte Nickel-Zwischenkopie erhalten wird, verfahrensmäßig dadurch gekennzeichnet, daß es zudem folgende Schritte enthält:
i) Aufbringen einer Glättungsschicht (2), bestehend aus (a) Polymethylmethacrylat (PMMA), gelöst in einem Lösungsmittel, oder (b) einem verdünnten Photoresist, oder (c) einem verdünnten Elektronenstrahl-Resist, auf die Oberfläche der elektroplattierten Nickelkopie (1);
ii) Metallisieren der Glättungsschicht und Ziehen einer elektroplattierten Kopie davon; und
iii) Verwenden einer weiteren Kopieausfertigung als Model für die Replicascheiben-Gieß- oder Spritzgießform.

## Revendications

1. Procédé de fabrication de disques optiques du type comportant un dessin superficiel en relief, ledit procédé comportant les étapes consistant à :
former un disque-père selon un procédé de gravure ou un procédé à résine photosensible ; et
recouvrir la résine résultante avec du nickel, par électro-plaquage, pour produire une copie intermédiaire plaquée nickel ;
ledit procédé étant caractérisé en ce qu'il comporte en outre les étapes consistant à :
i) appliquer, sur la surface de la copie plaquée nickel (1), une couche (2) de lissage, constituée par
a) du poly(méthacrylate de méthyle) en solution dans un solvant, ou
b) une résine photosensible diluée, ou
c) une résine sensible à un faisceau d'électrons, diluée ;
ii) métalliser la couche de lissage et en faire une copie formée par voie électrolytique ; et
iii) utiliser une copie de génération ultérieure comme modèle pour la coulée ou le moulage par injection de disques répliques.
